(19) Europäisches Patentamt
European Patent Office
Office européen des brevets

(11) **EP 2 976 852 B1**

(12) **EUROPEAN PATENT SPECIFICATION**

(45) Date of publication and mention
of the grant of the patent:
**25.10.2017 Bulletin 2017/43**

(21) Application number: **13712521.7**

(22) Date of filing: **20.03.2013**

(51) Int Cl.:
*H04L 7/027* (2006.01)   *H04B 10/61* (2013.01)
*H04J 14/06* (2006.01)

(86) International application number:
**PCT/EP2013/055816**

(87) International publication number:
**WO 2014/146708 (25.09.2014 Gazette 2014/39)**

(54) **TIMING RECOVERY APPARATUS**

TAKTRÜCKGEWINNUNGSVORRICHTUNG

APPAREIL DE RÉCUPÉRATION DU RYTHME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.01.2016 Bulletin 2016/04**

(73) Proprietor: **Huawei Technologies Co., Ltd.
Longgang District
Shenzhen, Guangdong 518129 (CN)**

(72) Inventor: **STOJANOVIC, Nebojsa
80992 Munich (DE)**

(74) Representative: **Kreuz, Georg Maria et al
Huawei Technologies Duesseldorf GmbH
Riesstrasse 8
80992 München (DE)**

(56) References cited:
**US-A1- 2006 285 854     US-A1- 2010 329 677
US-A1- 2012 219 302**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>BACKGROUND</u>

An important goal of long-haul optical fiber systems is to transmit the highest data throughput over longest distances without signal regeneration in optical-electrical-optical regenerators. Given constraints on the bandwidth imposed by optical amplifiers and ultimately by the fiber itself, it is important to maximize spectral efficiency. Most current systems use binary modulation formats, such as on-off keying encoding one bit per symbol.

Advanced modulation formats in combination with coherent receivers enable high capacity and spectral efficiency. Polarization multiplexing, quadrature amplitude modulation (QAM) and coherent detection are seen as a winning combination for the next generation of high-capacity optical transmission systems since they allow information encoding in all the available degrees of freedom. Commercial devices using QAM constellation are already available in 40 and 100 Gb/s optical systems. US 2012/219302 A1 describes a method and a system for estimating a clock phase of the received signal so as to compensate for the effects of chromatic dispersion from the clock phase error. This is done by calculating a phase shift between a pair of related frequency domain data outputs of a Fourier transform circuit in response to time domain data associated with a received optical signal.

<u>SUMMARY</u>

It is the object of the invention to enhance digital signal processing.

This object is achieved by the features of the independent claims. Further implementation forms are apparent from the dependent claims, the description and the figures.

In order to describe the invention in detail, the following terms, abbreviations and notations will be used:

CD:      chromatic dispersion,
PMD:    polarization mode dispersion,
OFE:     optical front end,
TIA:      transimpedance amplifier,
DSP:     digital signal processing,
TED:     timing error detection,
TEDC:   timing error detection characteristics,
AGC:     automatic gain control,
ADC:     analog/digital converter,
QAM:    quadrature amplitude modulation,
VCO:     voltage controlled oscillator,
PLL:      phase locked loop,
LO:       local oscillator,
PMD:    polarization mode dispersion,
FFT:      fast fourier transformation,
IFFT:     inverse fast fourier transformation,
FIR:      finite impulse response,
PD:       phase detector,
ROF:     roll-off factor,
QPSK:   quaternary phase shift keying,
PSK:     phase shift keying,
CDU:     clock distribution unit,
LPF:      low pass filter,
UI:        unit interval,
I:         in-phase,
Q:        quadrature.

According to a first aspect, the invention relates to a timing recovery apparatus, comprising a grouper configured for grouping digital signal values of a digital signal to obtain groups of values, each group of values comprising a first digital value and a second digital value; a multiplier configured for multiplying a first digital value with the conjugated version of a second digital value of each group of values to obtain a first group value representing each group of values, and configured for multiplying a second digital value of each group of values with the conjugated version of a first digital value of a respectively adjacent group of values to respectively obtain a second group value representing adjacent group of values; a processor configured for processing the first group values respectively representing adjacent groups of values and the second group values respectively representing the adjacent groups of values to obtain a plurality of processed values; and an averager configured for determining an average value from the plurality of processed values.

In a first possible implementation form of the timing recovery apparatus according to the first aspect as such, the grouper is configured to group subsequent N values of the digital signal to obtain a respective group of values.

In a second possible implementation form of the timing recovery apparatus according to the first aspect as such or according to the first implementation form of the first aspect, the grouper comprises an oversampler configured for oversampling an input optical signal to obtain the digital signal.

In a third possible implementation form of the timing recovery apparatus according to the first aspect as such or according to any of the preceding implementation forms of the first aspect, the multiplier comprises a plurality of digital multipliers.

In a third possible implementation form of the timing recovery apparatus according to the first aspect as such or according to any of the preceding implementation forms of the first aspect, the multiplier comprises a plurality of digital multipliers.

In a fourth possible implementation form of the timing recovery apparatus according to the first aspect as such or according to any of the preceding implementation forms of the first aspect, the processor comprises configured for each group of values, a subtractor configured for subtracting first group values representing adjacent groups of values, and a multiplier configured for multiplying the subtraction result with a respective second group of values representing these adjacent group of values.

In a fifth possible implementation form of the timing recovery apparatus according to the first aspect as such or according to any of the preceding implementation forms of the first aspect, the averager is configured to average over real parts of the plurality of processed values to determine the average value.

In a sixth possible implementation form of the timing recovery apparatus according to the first aspect as such or according to any of the preceding implementation forms of the first aspect, the timing recovery apparatus comprises a loop filter configured for filtering the average value.

According to a second aspect, the invention relates to a communication receiver apparatus comprising a receiver configured for receiving a communication signal; the timing recovery apparatus of any of the preceding claims configured for timing recovery upon the basis of the communication signal; and a voltage controlled oscillator configured for providing a clock signal, the being voltage controlled oscillator controlled by an output of the recovery apparatus.

In a first possible implementation form of the communication receiver apparatus according to the second aspect as such, the clock signal is provided to the receiver.

In a second possible implementation form of the communication receiver apparatus according to the second aspect as such or according to the first implementation form of the second aspect, the communication receiver apparatus comprises a plurality of receivers, wherein the clock signal is distributed to the plurality of receivers.
further comprises a chromatic dispersion compensation unit arranged downstream the voltage controlled oscillator.

In an possible implementation form of the communication receiver apparatus according to the second aspect as such or according to any of the preceding implementation forms of the second aspect, the communication receiver apparatus is an optical communication receiver.

According to a third aspect, the invention relates to a timing recovery method comprising grouping digital signal values of a digital signal to obtain groups of values, each group of values comprising a first digital value and a second digital value; multiplying a first digital value with the conjugated version of a second digital value of each group of values to obtain a first group value representing each group of values, and multiplying a second digital value of each group of values with the conjugated version of a first digital value of a respectively adjacent group of values to respectively obtain a second group value representing adjacent group of values; processing the first group values respectively representing adjacent groups of values and the second group values respectively representing adjacent groups of values to obtain a plurality of processed values; and determining an average value from the plurality of processed values.

In a first possible implementation form of the timing recovery method according to the third aspect as such, the method comprises performing the timing recovery method of claim 13 to provide average values; and controlling the average values to obtain the clock signal.

According to a fourth aspect, the invention relates to a computer program with a program code configured for performing the method according to according to the third aspect as such or according to first implementation forms of the third aspect, when run on a computer.

According to a fifth aspect, a timing recovery apparatus is provided. The timing recovery apparatus comprises a processor configured to perform the method according to the third aspect as such or according to any of the preceding implement forms of the third aspect.

These and other aspects of the invention will be apparent from the embodiment(s) described below.

Fig. 1 shows a block diagram of a coherent optical receiver;

Fig. 2 shows basic DSP blocks;

Fig. 3 shows a CD compensation block;

Fig. 4 shows a frequency and impulse response of raised-cosine filter with various roll-off factors;

Fig. 5 shows quadrature phase-shift keying (QPSK) timing error detector characteristic (TEDC);

Fig. 6 shows further quadrature phase-shift keying (QPSK) timing error detector characteristics (TEDC);

Fig. 7 shows signal pre-processing;

Fig. 8 shows TED characteristics of a phase detector PD;

Fig. 9 shows further TED characteristics of a phase detector PD;

Fig. 10 shows further TED characteristics of a phase detector PD;

Fig. 11 shows further TED characteristics of a phase detector PD;

Fig. 12 shows further TED characteristics of a phase detector PD;

Fig. 13 shows Nyquist super-channel clocking;

Fig. 14 shows a parallel implementation; and

Fig. 15 shows a flow chart of a timing recovery method.

## DETAILED DESCRIPTION OF EMBODIMENTS OF THE INVENTION

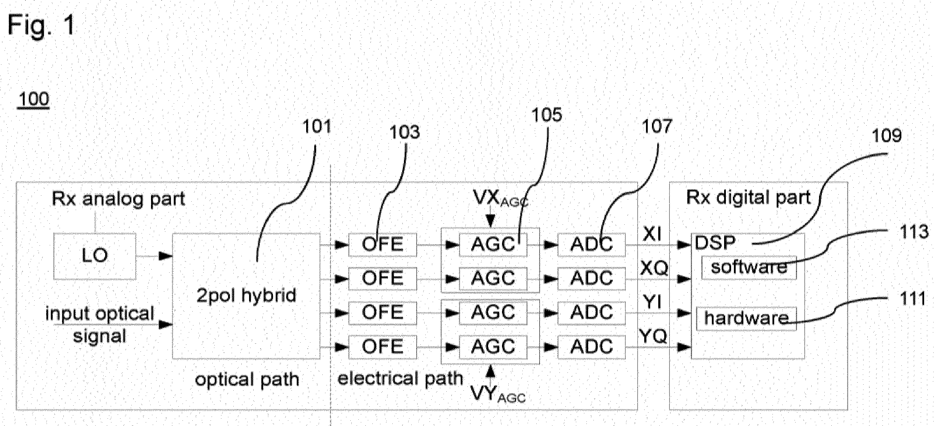

Fig. 1 shows a block diagram of a coherent optical receiver 100. Since digital signals are mapped into both polarization, a 90°hybrid 101 is used to mix input optical signal with a local oscillator (LO) signal resulting in four output signals (two signals per polarization). The output optical signals of the 2Pol hybrid 101 are converted into electrical signals via a plurality of optical front ends (OFEs) 103 consisting of photo diodes, e.g. single PIN or balanced, and a transimpedance amplifier (TIA).

As the power of the converted electrical signals may vary over time, a plurality of fast automatic gain control (AGC) blocks 105 may be used to compensate for signal power variations. There are exampled four AGC blocks 105 which can also be an integral part of the OFE blocks 103. Due to realization complexity, a pair of AGC blocks 105 is controlled by one voltage control signal, such as $VX_{AGC}$ for X polarization and $VY_{AGC}$ for Y polarization in Fig. 1. However, each of the four AGC blocks 103 can also be controlled by one independent voltage control signal. Output signals of the AGC blocks 105are quantized by a plurality of analog-to-digital converters (ADCs) 107 to produce four quantized digital signals.

Four quantized digital signals are further processed in a digital signal processing (DSP) block 109 that is divided into two parts, a fast DSP hardware part 111 and a slow DSP software part 113. In the DSP block 109, the quantized digital signals are compensated for chromatic dispersion (CD), polarization mode dispersion (PMD), polarization rotation, nonlinear effects, LO noise, LO frequency offset, etc. Estimation of slow processes, such as LO frequency offset and CD, can be done in the software part 113 of the DSP block.

The DSP block may be in the form of a DSP circuit.

The a hybrid 101, optical front ends (OFEs) 103, automatic gain control (AGC) blocks 105 and analog-to-digital converters (ADCs) 107 are within the Rx analogue part of the receiver 100, whereas the digital signal processing (DSP) block 109, DSP hardware part 111 and DSP software part 113 are within the Rx digital part.

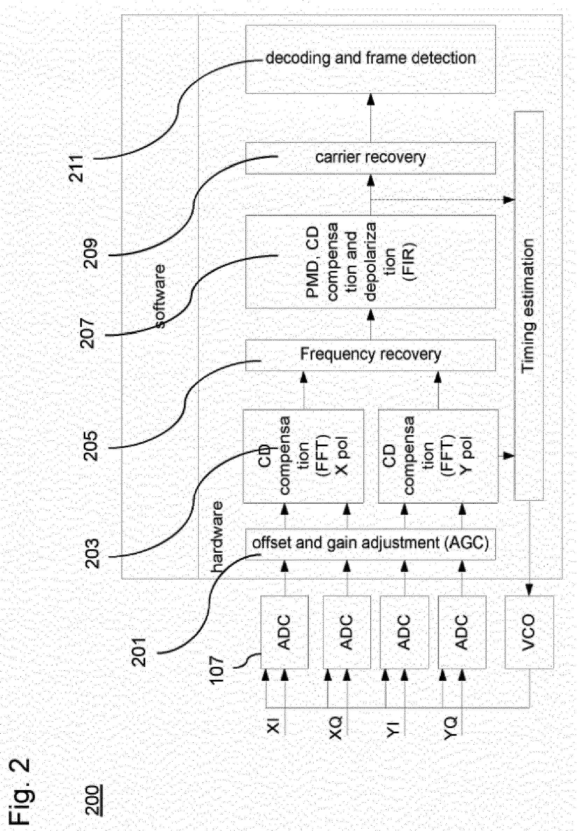

Fig. 2 shows basic DSP blocks 101 of Fig1 , shown as 200 in this figure. After offset and gain correction 201 the four signals are equalized for chromatic dispersion in frequency domain using two fast Fourier transformation (FFT) blocks 203. Frequency offset is removed in a frequency recovery block 205.

Polarization tracking, PMD compensation and residual CD compensation are done in time domain using finite impulse response (FIR) filters 207 arranged in butterfly structure. Both residual frequency offset and carrier phase recovery are done in a carrier recovery block 209. When differential decoding is applied at the transmitter side, a differential decoder is used in a decoding and frame detection block 211.

CD is efficiently compensated in FFT blocks 203. The compensation CD function is

$$CD^{-1}(DL) = \exp\left(-j\left(\frac{2\pi n f_s}{N}\right)^2 \frac{\lambda_0^2 DL}{4\pi c}\right) \tag{1}$$

where $\lambda_0$ is the signal wavelength, $f_s$ is the sampling frequency, $N$ is the FFT size, $c$ is the speed of light, $n$ is the tap number, $L$ is the fiber length, and $D$ is the dispersion coefficient.

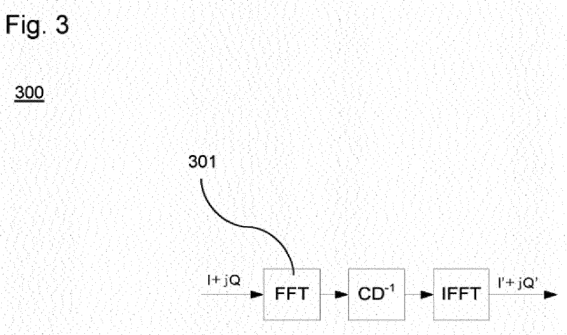

Fig. 3 shows a CD compensation block 203 of Fig. 2. Due to complexity reasons, only one FFT block 301 with a complex input is applied to each polarization. The inverse FFT (IFFT) is identical to the FFT although real and imaginary parts are swapped at input and output.

In digital communication systems the heart of each receiver is a clock recovery circuit that extracts frequency and phase from an incoming optical signal and forces a local clock source to control the sampling rate and the sampling phase of the ADC. In over-sampled systems data processing blocks are less sensitive to the sampling phase.

Phase detectors (PD) are used in practical systems. In phase detectors a timing error detector characteristic, ie PD output over symbol interval, is very similar to a sinusoidal function. One exception is a "bang-bang" phase detector in which TEDC also has sinusoidal shape in the presence of noise. Some PDs work with one sample per symbol, while others are used with two-fold oversampling.

A real part of a PD timing error detector characteristic (TEDC) can be described for complex signals for example as:

$$TEDC(\tau) = E\left[real\left(x(kT - T/2 + \tau)(x*(kT + \tau) - x*(kT - T + \tau))\right)\right] \tag{2}$$

where $T$ is a symbol interval, $x$ is an input optical signal , $\tau$ is a sampling instant (between 0 and $T$), $E$ is an expectation, and * denotes a complex conjugate operation. The imaginary part of a PD can be easily translated in FFT domain as

$$TEDC(\tau) = E\left[imag\left(\sum_{k=0}^{N/2-1} X(k)X*(N/2 + k)\right)\right] \tag{3}$$

where $N$ is a FFT-size, and $X$ is a FFT of $x(kT/2+\tau)$), $k=0,1,..N-1$. The received signal is oversampled with two samples per symbol.

Nyquist transmission based on Nyquist pulses is used to frequency limit channel bandwidth.

This enables better channel packaging and automatically higher spectral efficiency. The raised-cosine filter is an implementation of a low-pass Nyquist filter, i.e. a filter having the property of vestigial symmetry. This means that its spectrum exhibits odd symmetry about 1/2 $T$, where $T$ is the symbol-period of the communications system. Its frequency-domain description is given by:

$$H(f) = \begin{cases} T, & |f| \leq \dfrac{1-\beta}{2T} \\ \dfrac{T}{2}\left[1 + \cos\left(\dfrac{nT}{\beta}\left[|f| - \dfrac{1-\beta}{2T}\right]\right)\right], & \dfrac{1-\beta}{2T} < |f| \leq \dfrac{1+\beta}{2T} \\ 0, & otherwise \end{cases}$$

$$0 \leq \beta \leq 1 \tag{4}$$

and characterized by two values: $\beta$ - the *roll-off factor* and $T$ - the sampling period. The impulse response of such a filter is given by:

$$h(t) = \sin c\left(\frac{t}{T}\right)\frac{\cos\left(\dfrac{\pi\beta t}{T}\right)}{1 - \dfrac{4\beta^2 t^2}{T^2}} \tag{5}$$

in terms of the normalized *sinc*-function.

The roll-off factor $\beta$ is a measure of the excess bandwidth of the filter, ie the bandwidth occupied beyond the Nyquist bandwidth of $1/2T$.

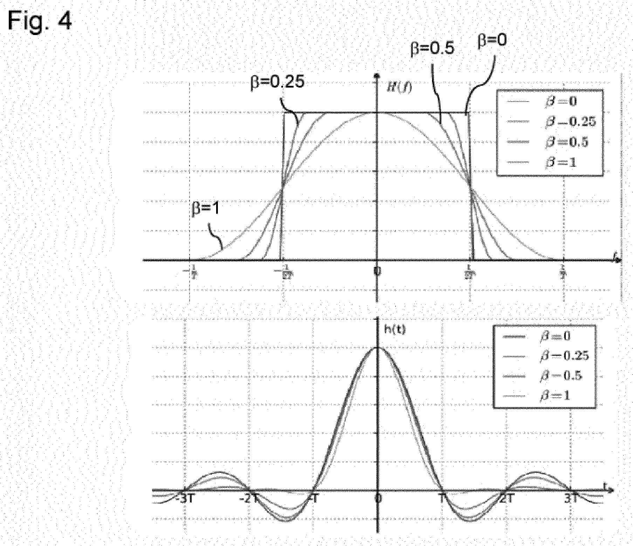

Fig. 4 shows frequency and impulse response of raised-cosine filter with various roll-off factors. Minimum signal bandwidth is achieved for roll-off factor equal to 0.

Decreasing roll-off factor (ROF) destroys clock tone quality. The TEDC becomes small and generates large and uncontrolled jitter. TEDC simulation results of PD for QPSK modulation format at Eb/N0=3dB show clock tone degradation for small ROF values. Sinusoidal TEDC is acceptable for ROF values greater than 0.3.

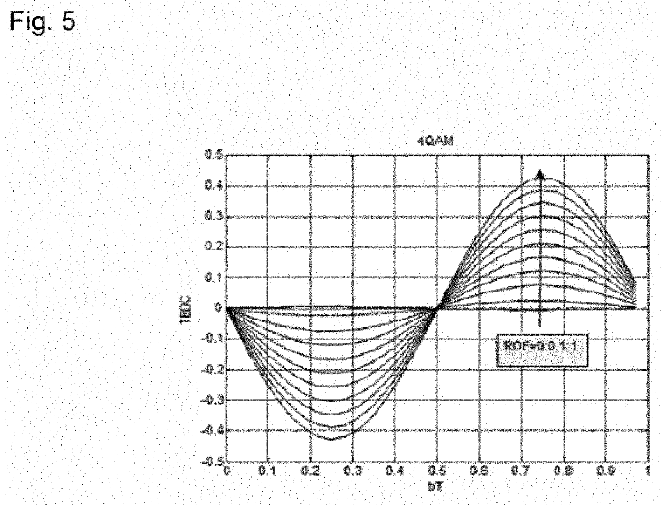

Fig. 5 shows a quadrature phase-shift keying (QPSK) timing error detector characteristic (TEDC) for ROF from 0 to 1 with a step width of 0.1.

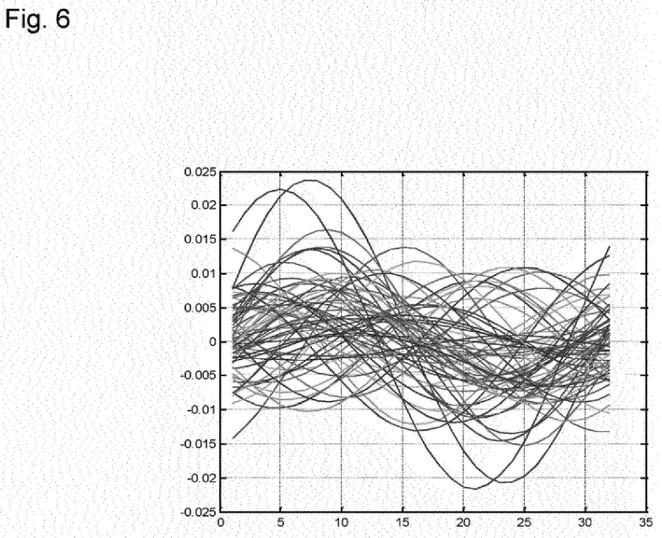

Fig. 6 shows QPSK TEDCs for ROF=0 and the clock recovery problem. In this case simulated TEDCs (one per 512 symbols) for ROF=0 are very small and desynchronized.

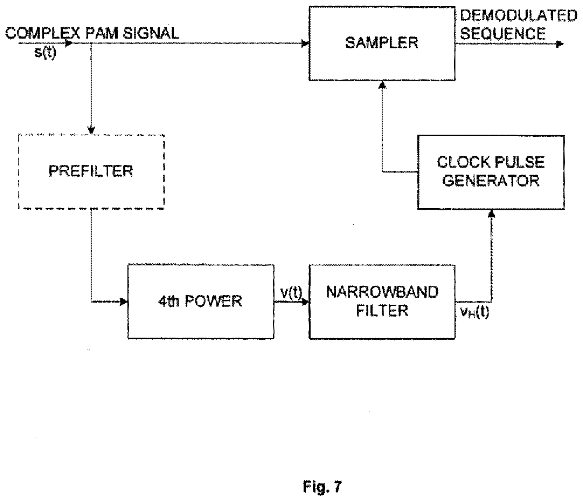

Fig. 7 shows signal pre-processing. In Fig. 7 power operation in PAM systems is used to generate the clock tone at Baud rate. This approach uses specific pre-filter and narrowband filter to filter out the clock tone. It enables the clock extraction for small ROF values but fails for higher ROF values. The complete system is realized in the analog domain where is no limitation in terms of sampling frequency and signal digitalizing before the clock extraction.

The invention describes a method for the clock extraction in Nyquist systems with the benefits that the method enables clock extraction independently on ROF value unlike other known techniques. While present PD detectors often use two complex multiplications per symbol, the proposed PD uses additionally 1.5 complex multiplications per symbol, i.e. totally 3.5 multiplications. The method is independent from the order of QAM and PSK modulation formats and can tolerate a large frequency offset.

The enhanced PD works with complex modulation formats. The received signal is twice over-sampled, ie two samples per symbol. Let us denote samples within one symbol interval $n$ by A(n) and B(n). Then, the TEDC is calculated using equation

$$TEDC(n) = real\left\{\left[C(n-1) - C(n+1)\right]conj\left[C(n)\right]\right\} \tag{6}$$

where C values are derived as

$$C(n-1) = A(n-1)conj\left[B(n-1)\right]$$
$$C(n) = B(n-1)conj\left[A(n)\right] \tag{7}$$
$$C(n+1) = A(n)conj\left[B(n)\right]$$

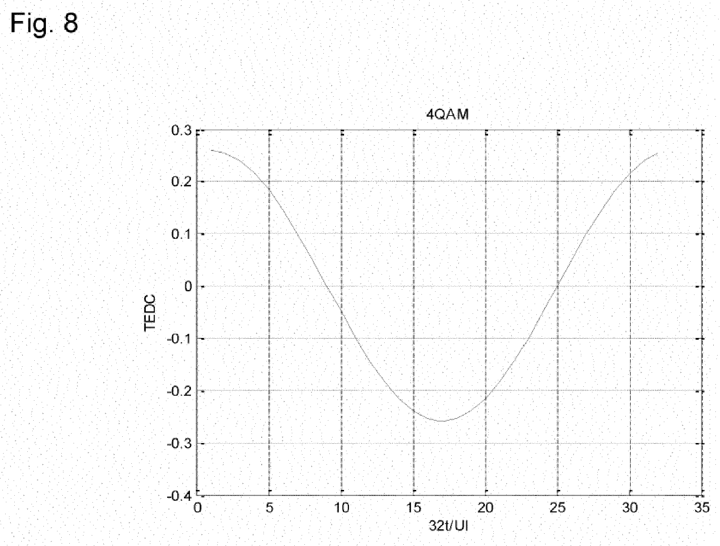

The TEDC has a sinusoidal shape with positive zero crossing indicating steady-state (sampling instant; see Fig. 8). Using imaginary part in equation (5) results in TEDC having the constant value over one unit interval (UI) symbol interval. Such a TEDC cannot be used for clock extraction.

Fig. 8 shows TED characteristics of the proposed PD with 4QAM (4-PSK), Eb/N0=3dB, and ROF=0. In simulation results jitter performance is investigated. Each TEDC curve is derived on 512 symbols. 64 curves are shown in each figure. The amount of jitter can be estimated from the width of positive zero crossing area. In all cases the peak-to-peak jitter does not cross 4% of UI (sampling period; unit interval).

By careful design of PLL loop this jitter can be kept in acceptable limits. Based on publications and experience, such jitter performances are within applicable limits.

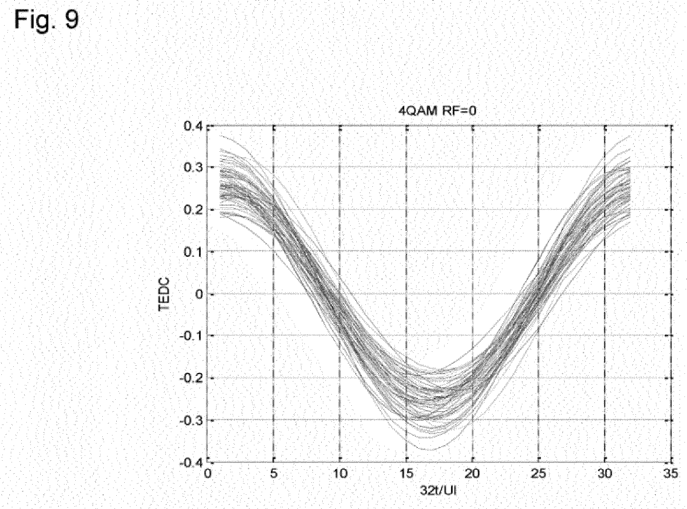

Fig. 9 shows further TED characteristics of a phase detector PD with 4QAM and Eb/N0=3dB.

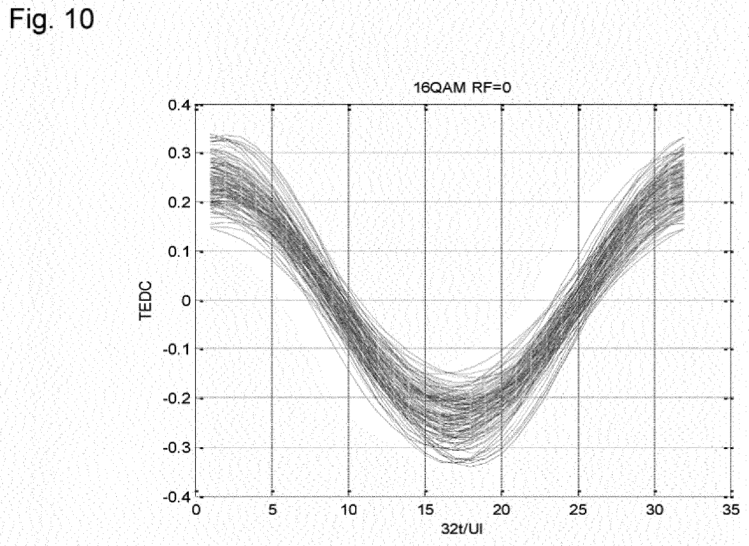

Fig. 10 shows further TED characteristics of a phase detector PD with 16QAM and Eb/N0=6dB.

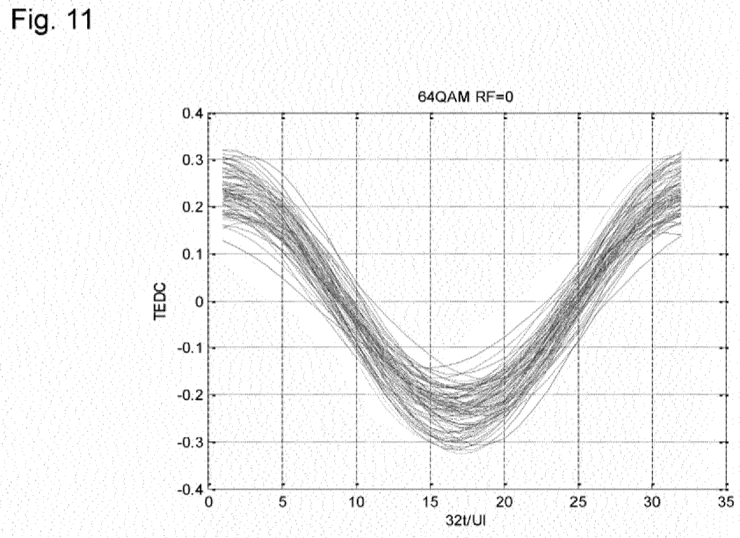

Fig. 11 shows further TED characteristics of a phase detector PD with 64QAM and Eb/N0=10dB.

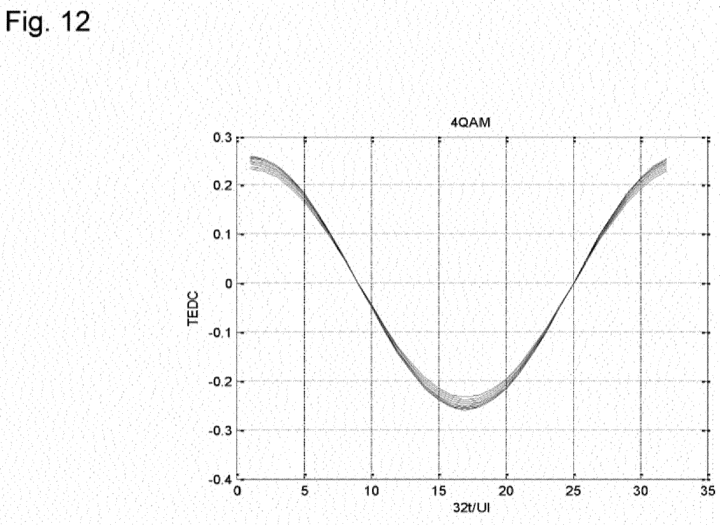

Fig. 12 shows further TED characteristics of a phase detector PD with 4QAM and Eb/N0=3dB.

4QAM modulation format is simulated for ROF=0. The frequency offset varies from 0 to 1 GHz in step of 100MHz. Baud rate is 28GB. In Fig. 12 results indicate immunity with respect to a large frequency offset. Even a frequency offset of 1 GHz does not influence TEDC, i.e. the curve with smallest maximum absolute value.

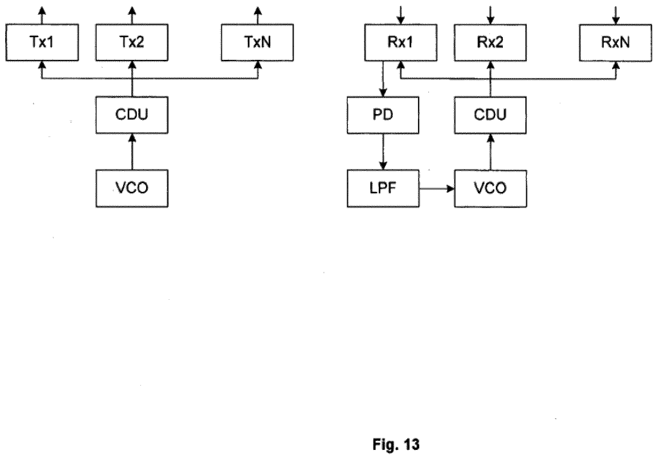

Fig. 13 shows Nyquist super-channel clocking. In coherent optical communication spectral efficiency is increased using higher modulation formats, both polarizations and dense channel packaging, like OFDM, Nyquist, etc. However, a group of N transmitters is integrated to save power, size and price.

Instead of N VCOs a super-channel can share one VCO for all transmitters. In Fig. 13 one VCO supplies the clock distribution unit (CDU) that clocks all N transmitters. The receiver side gains from channel integration. Instead of the number of N only one PD is implemented to support clock extraction. One PD connected to data of the first receiver or any other receiver extracts clock tone information that is later filtered by low-pass filter (LPF) and sent to VCO. PD gain, LPF parameters and VCO gain control the timing performance, such as loop bandwidth, dumping, etc.

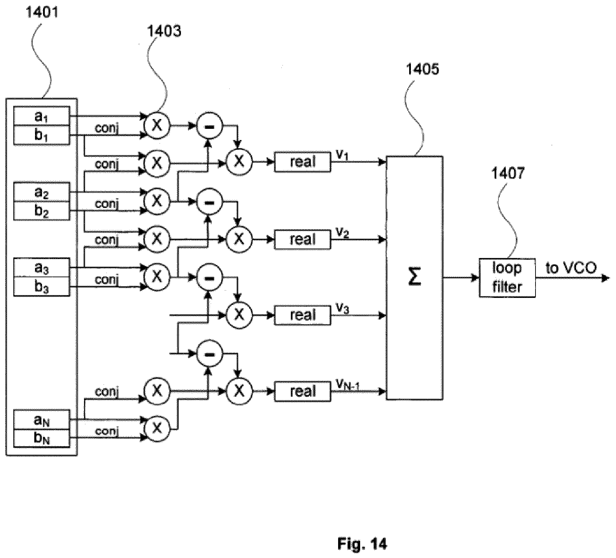

Fig. 14 shows a parallel implementation of a timing recovery apparatus. The timing recovery apparatus comprises a grouper 1401 for grouping digital signal values of a digital signal to obtain groups of values, each group of values comprising a first digital value and a second digital value; a multiplier 1403 for multiplying a first digital value with a conjugated version of a second digital value of each group of values to obtain a first group value representing each group of values, and for multiplying a second digital value of each group of values with a conjugated version of a first digital value of a respectively adjacent group of values to respectively obtain a second group value representing adjacent group of values; a processor 1405 for respectively processing first group values respectively representing adjacent groups of values and a second group values representing the adjacent groups of values to obtain a plurality of processed values; and an averager for determining an average value from the plurality of processed values.

High symbol rates require parallel implementation of DSP algorithms including the clock extraction algorithm. Data are grouped in blocks of *N* symbols. When two-fold oversampling is employed the total number of samples per block is 2*N*. In Fig. 14, two samples within one symbol interval are denoted by *a* and *b*.

Maximum number of PD outputs per data block is equal to *N*. As shown in Fig. 14, the last output requires first two samples from next data block. In real applications, not all data have to be processed by PDs. Usually, some portion of data are unused that might sacrifice clock performance. High modulation formats require higher signal-to-noise ratios, and the reducing the number of data to be processed in the clock extraction engine does not significantly influence timing performance.

PD outputs denoted by *v* are summed up and filtered by a loop filter (low-pass filter) 1407 that can have a proportional-integral structure. Filter 1407 outputs control VCO frequency and phase. The VCO output then clocks the subsequent ADC circuit.

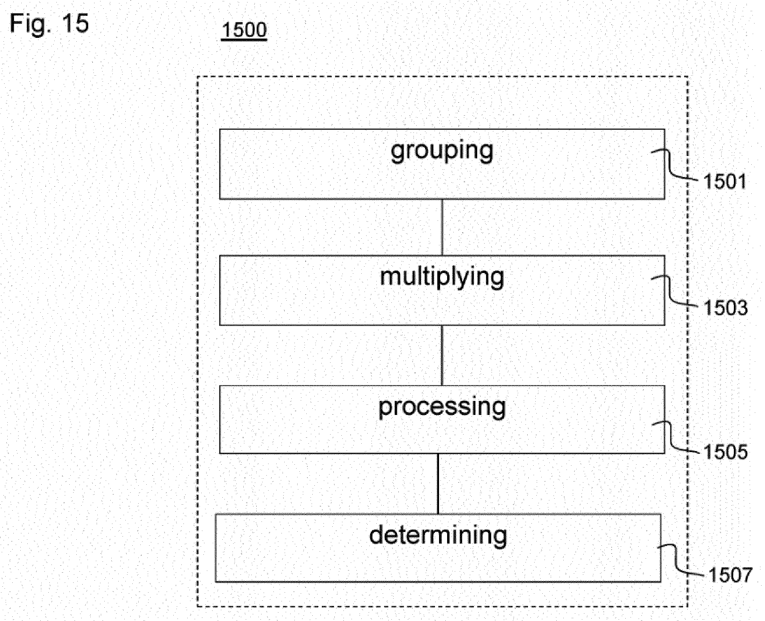

Fig. 15 shows an example timing recovery method, wherein digital signal values of a digital signal are grouped 1501 to obtain groups of values, each group of values comprising a first digital value and a second digital value. Then a first digital value is multiplied 1503 with a conjugated version of a second digital value of each group of values to obtain a first group value representing each group of values, and a second digital value of each group of values is multiplied with a conjugated version of a first digital value of a respectively adjacent group of values to respectively obtain a second group value representing adjacent group of values. Moreover, first group values respectively representing adjacent groups of values and a second group values representing the adjacent groups of values are processed 1505 to obtain a plurality of processed values. Further, an average value is determined 1507 from the plurality of processed values.

According to another perspective, a timing recovery apparatus embodiment is provided, which comprises a processor configured to perform the method embodiment as shown in Fig. 15.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the scope of the present invention. It is therefore to be understood that within the scope of the appended claims, the inventions may be practiced otherwise than as specifically described herein.

**Claims**

1. Timing recovery apparatus, comprising:

   a grouper (1401) configured for grouping digital signal values of a digital signal to obtain groups of values, each group of values comprising a first digital value and a second digital value;
   a multiplier (1403) configured for multiplying a first digital value, $a_1$, $a_2$, ..., $a_n$, with the conjugated version of a second digital value, $b1^*$, $b_2^*$, ..., $b_n^*$, of each group of values to obtain a first group value, $a_1b_1^*$, $a_2b_2^*$, ..., $a_nb_n^*$, representing each group of values, and configured for multiplying a second digital value, $b_1$, $b_2$, ..., $b_{n-1}$,

of each group of values, $a_1b_1$, $a_2b_2$, ..., $a_nb_n$, with the conjugated version of a first digital value, $a_2^*$, $a_3^*$, ..., $a_n^*$, of a respectively adjacent group of values to respectively obtain a second group value, $b_1a_2^*$, $b_2a_3^*$, ..., $b_{n-1}a_n^*$, representing adjacent group of values;

a processor (1405) configured for processing the first group values, $a_1b_1^*$, $a_2b_2^*$, ..., $a_nb_n^*$, respectively representing adjacent groups of values and the second group values, $b_1a_2^*$, $b_2a_3^*$, ..., $b_{n-1}a_n^*$, respectively representing adjacent groups of values to obtain a plurality of processed values; and

an averager (1405) configured for determining an average value from the plurality of processed values.

2. The timing recovery apparatus of claim 1, wherein the grouper (1401) is configured to group subsequent N values of the digital signal to obtain a respective group of values.

3. The timing recovery apparatus of claim 1 or 2, wherein the grouper (1401) comprises an oversampler configured for oversampling an input optical signal to obtain the digital signal.

4. The timing recovery apparatus of any of the preceding claims, wherein the multiplier (1403) comprises a plurality of digital multipliers.

5. The timing recovery apparatus of any of the preceding claims, wherein the processor (1405) comprises, for each group of values, a subtractor configured for subtracting first group values representing adjacent groups of values, and a multiplier configured for multiplying the subtraction result with a respective second group of values representing these adjacent group of values.

6. The timing recovery apparatus of any of the preceding claims, wherein the averager (1405) is configured to average over real parts of the plurality of processed values to determine the average value.

7. The timing recovery apparatus of any of the preceding claims, further comprising a loop filter (1407) configured for filtering the average value.

8. Communication receiver apparatus, comprising:

a receiver configured for receiving a communication signal;

the timing recovery apparatus of any of the preceding claims configured for timing recovery upon the basis of the communication signal; and

a voltage controlled oscillator configured for providing a clock signal, the being voltage controlled oscillator controlled by an output of the recovery apparatus.

9. The communication receiver apparatus of claim 8, wherein the clock signal is provided to the receiver.

10. The communication receiver apparatus of claim 8 or 9, comprising a plurality of receivers, wherein the clock signal is distributed to the plurality of receivers.

11. The communication receiver apparatus of claims 8 to 10, further comprising a chromatic dispersion compensation unit arranged downstream the voltage controlled oscillator.

12. Timing recovery method, comprising:

grouping (1501) digital signal values of a digital signal to obtain groups of values, each group of values comprising a first digital value and a second digital value;

multiplying (1503) a first digital value, $a_1$, $a_2$, ..., $a_n$, with the conjugated version of a second digital value, $b1^*$, $b_2^*$, ..., $b_n^*$, of each group of values to obtain a first group value, $a_1b_1^*$, $a_2b_2^*$, ..., $a_nb_n^*$, representing each group of values, and multiplying a second digital value, $b_1$, $b_2$, ..., $b_{n-1}$, of each group of values with the conjugated version of a first digital value, $a_2^*$, $a_3^*$, ..., $a_n^*$, of a respectively adjacent group of values to respectively obtain a second group value representing adjacent group of values, $b_1a_2^*$, $b_2a_3^*$, ..., $b_{n-1}a_n^*$;

processing (1505) the first group values, $a_1b_1^*$, $a_2b_2^*$, ..., $a_nb_n^*$, respectively representing adjacent groups of values and the second group values, $b_1a_2^*$, $b_2a_3^*$, ..., $b_{n-1}a_n^*$, respectively representing adjacent groups of values to obtain a plurality of processed values; and

determining (1507) an average value from the plurality of processed values.

**13.** Method for generating a clock signal from a received communication signal, the method comprising:

performing the timing recovery method of claim 12 to provide average values; and
controlling the average values to obtain the clock signal.

**14.** A computer program with a program code for performing the method according to claim 12 or 13 when run on a computer.

**Patentansprüche**

**1.** Timing-Wiedergewinnungsvorrichtung, umfassend:

einen Gruppierer (1401), ausgelegt zum Gruppieren von digitalen Signalwerten eines digitalen Signals, um Gruppen von Werten zu erhalten, wobei jede Gruppe von Werten einen ersten digitalen Wert und einen zweiten digitalen Wert umfasst;
einen Multiplizierer (1403), ausgelegt zum Multiplizieren eines ersten digitalen Werts $a_1$, $a_2$, ..., an mit der konjugierten Version eines zweiten digitalen Werts $b1^*$, $b_2^*$, ..., $b_n^*$ jeder Gruppe von Werten, um einen ersten Gruppenwert $a_1b_1^*$, $a_2b_2^*$, ..., $a_nb_n^*$ zu erhalten, der jede Gruppe von Werten repräsentiert, und ausgelegt zum Multiplizieren eines zweiten digitalen Werts $b_1$, $b_2$, ..., $b_{n-1}$ jeder Gruppe von Werten $a_1b_1$, $a_2b_2$, ..., $a_nb_n$, mit der konjugierten Version eines ersten digitalen Werts $a_2^*$, $a_3^*$, ..., $a_n^*$ einer jeweils angrenzenden Gruppe von Werten, um jeweils einen zweiten Gruppenwert $b_1a_2^*$, $b_2a_3^*$, $b_{n-1}a_n^*$, der angrenzende Gruppe von Werten repräsentiert, zu erhalten;
einen Prozessor (1405), ausgelegt zum Verarbeiten der ersten Gruppenwerte $a_1b_1^*$, $a_2b_2^*$, ..., $a_nb_n^*$, die jeweils angrenzende Gruppen von Werten repräsentieren, und der zweiten Gruppenwerte $b_1a_2^*$, $b_2a_3^*$, ..., $b_{n-1}a_n^*$, die jeweils angrenzende Gruppen von Werten repräsentieren, um mehrere verarbeitete Werte zu erhalten; und
einen Mitteller (1405), ausgelegt zum Bestimmen eines Mittelwerts aus den mehreren verarbeiteten Werten.

**2.** Timing-Wiedergewinnungsvorrichtung nach Anspruch 1, wobei der Gruppierer (1401) ausgelegt ist zum Gruppieren von nachfolgenden N Werten des digitalen Signals, um eine jeweilige Gruppe von Werten zu erhalten.

**3.** Timing-Wiedergewinnungsvorrichtung nach Anspruch 1 oder 2, wobei der Gruppierer (1401) einen Überabtaster umfasst, ausgelegt zum Überabtasten eines eingegebenen optischen Signals, um das digitale Signal zu erhalten.

**4.** Timing-Wiedergewinnungsvorrichtung nach einem der vorhergehenden Ansprüche, wobei der Multiplizierer (1403) mehrere digitale Multiplizierer umfasst.

**5.** Timing-Wiedergewinnungsvorrichtung nach einem der vorhergehenden Ansprüche, wobei der Prozessor (1405) für jede Gruppe von Werten Folgendes umfasst: einen Subtrahierer, ausgelegt zum Subtrahieren von ersten Gruppenwerten, die angrenzende Gruppen von Werten repräsentieren, und einen Multiplizierer, ausgelegt zum Multiplizieren des Subtraktionsergebnisses mit einer jeweiligen zweiten Gruppe von Werten, die diese angrenzende Gruppe von Werten repräsentieren.

**6.** Timing-Wiedergewinnungsvorrichtung nach einem der vorhergehenden Ansprüche, wobei der Mitteller (1405) ausgelegt ist zum Mitteln über Realteile der mehreren verarbeiteten Werte, um den Mittelwert zu bestimmen.

**7.** Timing-Wiedergewinnungsvorrichtung nach einem der vorhergehenden Ansprüche, die ferner ein Schleifenfilter (1407) umfasst, dass dafür ausgelegt ist, den Mittelwert zu filtern.

**8.** Kommunikationsempfängervorrichtung, umfassend:

einen Empfänger, ausgelegt zum Empfangen eines Kommunikationssignals;
die Timing-Wiedergewinnungsvorrichtung nach einem der vorhergehenden Ansprüche, ausgelegt zur Timing-Wiedergewinnung auf der Basis des Kommunikationssignals; und
einen spannungsgesteuerten Oszillator, ausgelegt zum Bereitstellen eines Taktsignals, wobei dieser spannungsgesteuerte Oszillator durch eine Ausgabe der Wiedergewinnungsvorrichtung gesteuert wird.

**9.** Kommunikationsempfängervorrichtung nach Anspruch 8, wobei das Taktsignal dem Empfänger bereitgestellt wird.

**10.** Kommunikationsempfängervorrichtung nach Anspruch 8 oder 9, die mehrere Empfänger umfasst, wobei das Taktsignal an die mehreren Empfänger verteilt wird.

**11.** Kommunikationsempfängervorrichtung nach Anspruch 8 oder 10, die ferner eine downstream des spannungsgesteuerten Oszillators angeordnete Einheit zur Kompensation chromatischer Dispersion umfasst.

**12.** Timing-Wiedergewinnungsverfahren, umfassend:

Gruppieren (1501) von digitalen Signalwerten eines digitalen Signals, um Gruppen von Werten zu erhalten, wobei jede Gruppe von Werten einen ersten digitalen Wert und einen zweiten digitalen Wert umfasst; Multiplizieren (1503) eines ersten digitalen Werts $a_1$, $a_2$, ..., $a_n$ mit der konjugierten Version eines zweiten digitalen Werts $b_1{}^*$, $b_2{}^*$, ..., $b_n{}^*$ jeder Gruppe von Werten, um einen ersten Gruppenwert $a_1b_1{}^*$, $a_2b_2{}^*$, ..., $a_nb_n{}^*$ zu erhalten, der jede Gruppe von Werten repräsentiert, und einen zweiten digitalen Wert $b_1$, $b_2$, ..., $b_n$ jeder Gruppe von Werten mit der konjugierten Version eines ersten digitalen Werts $a_2{}^*$, $a_3{}^*$, ..., $a_n{}^*$ einer jeweils angrenzenden Gruppe von Werten multipliziert, um jeweils einen zweiten Gruppenwert, der angrenzende Gruppe von Werten $b_1a_2{}^*$, $b_2a_3{}^*$, ..., $b_{n-1}a_n{}^*$ repräsentiert, zu erhalten; Verarbeiten (1505) der ersten Gruppenwerte $a_1b_1{}^*$, $a_2b_2{}^*$, ..., $a_nb_n{}^*$, die jeweils angrenzende Gruppen von Werten repräsentieren, und der zweiten Gruppenwerte $b_1a_2{}^*$, $b_2a_3{}^*$, ..., $b_{n-1}a_n{}^*$, Repräsentieren angrenzender Gruppen von Werten, um mehrere verarbeitete Werte zu erhalten; und Bestimmen (1507) eines Mittelwerts aus den mehreren verarbeiteten Werten.

**13.** Verfahren zum Erzeugen eines Taktsignals aus einem empfangenen Kommunikationssignal, wobei das Verfahren Folgendes umfasst:

Ausführen des Timing-Wiedergewinnungsverfahrens nach Anspruch 12, um Mittelwerte bereitzustellen; und Steuern der Mittelwerte, um das Taktsignal zu erhalten.

**14.** Computerprogramm mit einem Programmcode zum Ausführen des Verfahrens nach Anspruch 12 oder 13, wenn es auf einem Computer laufengelassen wird.

**Revendications**

**1.** Appareil de récupération du rythme, comprenant :

un regroupeur (1401) conçu pour regrouper des valeurs de signal numérique d'un signal numérique afin d'obtenir des groupes de valeurs, chaque groupe de valeurs comprenant une première valeur numérique et une seconde valeur numérique ; un multiplicateur (1403) conçu pour multiplier une première valeur numérique $a_1$, $a_2$, ..., $a_n$ à la version conjuguée d'une seconde valeur numérique $b_1{}^*$, $b_2{}^*$, ..., $b_n{}^*$ de chaque groupe de valeurs afin d'obtenir une première valeur de groupe $a_1b_1{}^*$, $a_2b_2{}^*$, ..., $a_nb_n{}^*$ représentant chaque groupe de valeurs, et conçu pour multiplier une seconde valeur numérique $b_1$, $b_2$, ..., $b_{n-1}$ de chaque groupe de valeurs $a_1b_1$, $a_2b_2$, ..., $a_nb_n$ à la version conjuguée d'une première valeur numérique $a_2{}^*$, $a_3{}^*$, ..., $a_n{}^*$ d'un groupe de valeurs respectivement adjacent afin d'obtenir respectivement une seconde valeur de groupe $b_1a_2{}^*$, $b_2a_3{}^*$, ..., $b_{n-1}a_n{}^*$ représentant des groupes de valeurs adjacents ; un processeur (1405) conçu pour traiter les premières valeurs de groupe $a_1b_1{}^*$, $a_2b_2{}^*$, ..., $a_nb_n{}^*$ représentant respectivement des groupes de valeurs adjacents, et les secondes valeurs de groupe $b_1a_2{}^*$, $b_2a_3{}^*$, ..., $b_{n-1}a_n{}^*$ représentant respectivement des groupes de valeurs adjacents afin d'obtenir une pluralité de valeurs traitées ; et un moyenneur (1405) conçu pour déterminer une valeur moyenne à partir de la pluralité de valeurs traitées.

**2.** Appareil de récupération du rythme selon la revendication 1, dans lequel le regroupeur (1401) est conçu pour regrouper N valeurs ultérieures du signal numérique afin d'obtenir un groupe de valeurs respectif.

**3.** Appareil de récupération du rythme selon la revendication 1 ou 2, dans lequel le regroupeur (1401) comprend un suréchantillonneur conçu pour suréchantillonner un signal optique d'entrée afin d'obtenir le signal numérique.

**4.** Appareil de récupération du rythme selon l'une quelconque des revendications précédentes, dans lequel le multiplicateur (1403) comprend une pluralité de multiplicateurs numériques.

5. Appareil de récupération du rythme selon l'une quelconque des revendications précédentes, dans lequel le processeur (1405) comprend, pour chaque groupe de valeurs, un soustracteur conçu pour soustraire des premières valeurs de groupe représentant des groupes de valeurs adjacents, et un multiplicateur conçu pour multiplier le résultat de la soustraction à un second groupe de valeurs respectif représentant ces groupes de valeurs adjacents.

6. Appareil de récupération du rythme selon l'une quelconque des revendications précédentes, dans lequel le moyenneur (1405) est conçu pour calculer une moyenne sur des parties réelles de la pluralité de valeurs traitées afin de déterminer la valeur moyenne.

7. Appareil de récupération du rythme selon l'une quelconque des revendications précédentes, comprenant en outre un filtre à boucle (1407) conçu pour filtrer la valeur moyenne.

8. Appareil récepteur de communication, comprenant :

   un récepteur conçu pour recevoir un signal de communication ;
   l'appareil de récupération du rythme selon l'une quelconque des revendications précédentes, conçu pour récupérer le rythme sur la base du signal de communication ; et
   un oscillateur commandé en tension conçu pour fournir un signal d'horloge, l'oscillateur commandé en tension étant commandé par une sortie de l'appareil de récupération.

9. Appareil récepteur de communication selon la revendication 8, dans lequel le signal d'horloge est fourni au récepteur.

10. Appareil récepteur de communication selon la revendication 8 ou 9, comprenant une pluralité de récepteurs, le signal d'horloge étant distribué à la pluralité de récepteurs.

11. Appareil récepteur de communication selon les revendications 8 à 10, comprenant en outre une unité de compensation de dispersion chromatique située en aval de l'oscillateur commandé en tension.

12. Procédé de récupération du rythme, consistant à :

   regrouper (1501) des valeurs de signal numérique d'un signal numérique afin d'obtenir des groupes de valeurs, chaque groupe de valeurs comprenant une première valeur numérique et une seconde valeur numérique ;
   multiplier (1503) une première valeur numérique $a_1$, $a_2$, ..., $a_n$ à la version conjuguée d'une seconde valeur numérique $b1^*$, $b_2^*$, ..., $b_n^*$ de chaque groupe de valeurs afin d'obtenir une première valeur de groupe $a_1b_1^*$, $a_2b_2^*$, ..., $a_nb_n^*$ représentant chaque groupe de valeurs, et multiplier une seconde valeur numérique $b_1$, $b_2$, ..., $b_n$ de chaque groupe de valeurs à la version conjuguée d'une première valeur numérique $a_2^*$, $a_3^*$, ..., $a_n^*$ d'un groupe de valeurs respectivement adjacent afin d'obtenir respectivement une seconde valeur de groupe représentant des groupes de valeurs adjacents $b_1a_2^*$, $b_2a_3^*$, ..., $b_{n-1}a_n^*$ ;
   traiter (1505) les premières valeurs de groupe $a_1b_1^*$, $a_2b_2^*$, ..., $a_nb_n^*$ représentant respectivement des groupes de valeurs adjacents, et les secondes valeurs de groupe $b_1a_2^*$, $b_2a_3^*$, .., $b_{n-1}a_n^*$ représentant respectivement des groupes de valeurs adjacents afin d'obtenir une pluralité de valeurs traitées ; et
   déterminer (1507) une valeur moyenne à partir de la pluralité de valeurs traitées.

13. Procédé de génération d'un signal d'horloge à partir d'un signal de communication reçu, le procédé consistant à :

   réaliser le procédé de récupération du rythme selon la revendication 12 afin de fournir des valeurs moyennes ; et commander les valeurs moyennes afin d'obtenir le signal d'horloge.

14. Programme informatique comprenant un code de programme permettant, lorsqu'il est exécuté sur un ordinateur, de réaliser le procédé selon la revendication 12 ou 13.

Fig. 1

100

Fig. 2

200

Fig. 3

300

301

$I + jQ$ → [ FFT ] → [ CD$^{-1}$ ] → [ IFFT ] → $I' + jQ'$

Fig. 4

Fig. 5

Fig. 6

Fig. 7

Fig. 8

EP 2 976 852 B1

Fig. 9

Fig. 10

16QAM RF=0

EP 2 976 852 B1

Fig. 11

64QAM RF=0

Fig. 12

Fig. 13

Fig. 14

Fig. 15

<u>1500</u>

EP 2 976 852 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012219302 A1